# EUROPEAN PATENT SPECIFICATION

(11) **EP 1 594 294 B1**
(45) Date of publication and mention of the grant of the patent: **27.06.2007**
(21) Application number: 04252598.0
(22) Date of filing: 05.05.2004
(51) Int. Cl.: H04M 1/274

(54) **Handheld electronic device and method of making dialed calls therefrom**
Tragbares, elektronisches Gerät und Verfahren zum Herstellen einer gewählten Verbindung damit
Dispositif électronique portatif et procédé pour la sélection de numéros d'appel à partir de celui-ci

(43) Date of publication of application: 09.11.2005
(73) Proprietor: Research In Motion Limited, Waterloo, Ontario N2L 3W8 (CA)
(72) Inventor: Asthana, Atul, Markham, Ontario L3R 2Y1 (CA)
(74) Representative: Hibbert, Juliet Jane Grace

(56) References cited:
- WO-A-97/03514
- GB-A- 2 297 012
- US-A1- 2001 028 642
- US-B1- 6 449 497
- US-B1- 6 542 733
- US-B1- 6 574 467

## Description

### BACKGROUND OF THE INVENTION

### Field of the Invention

This invention relates to reducing the burden of making telephone calls from a handheld electronic device, particularly where the handheld electronic device provides the capability of making calls using any one of a number of service providers.

### Background Information

Handheld electronic devices are now widely used for text messaging over the Internet through wireless connections. Many of these devices also have the capability of connecting with the telephone system through a mobile carrier. Various types of service are available for making such calls including, for instance, credit card calls, telephone calling cards (both domestic and international), voice over Internet protocol (VOIP), and session initiation protocol (SIP). Each of these service types requires a specific dialing sequence involving a series of multi-digit numbers in order to initiate the call. Presently, a caller must manually insert the required sequence. The burden of correctly identifying and inserting these long sequences of numbers is so considerable that the telephone capability of handheld electronic devices is greatly underutilized.

US 6,449,497 B1 describes a wireless communication device containing a speed-dial storage area containing one or more user-entered destination telephone numbers. An additional memory area contains the plurality of sets of additional digits to be added to the user-entered destination telephone number. The user associates one or more additional sets of digits to a selected user-entered destination telephone number. A control processor automatically adds the associated set of additional digits whenever the user-entered destination telephone number is selected.

WO 97/03514 describes a telecommunications interface system coupled to customer premises equipment such as a telephone or facsimile machine for controlling signal transmissions to and from a private communication network. The interface system has a memory device for storing long distance access codes and service providers, as well as area codes and toll free numbers. The interface system also contains a display device for displaying the long distance provider data stored in memory. The interface system provides various buttons for scrolling between long distance providers, preprogrammed area code information and buttons for automatic dialling of the long distance provider access codes, area codes and toll free codes.

### SUMMARY OF THE INVENTION

Aspects and features of the invention are set out in the accompanying claims.

Aspects of the invention are directed to a method of making dialed calls from a handheld electronic device that significantly reduces the burden on the caller. The method comprises the steps of establishing in the handheld electronic device a contact database containing: a list of call contacts including for each call contact at least one contact telephone number; a plurality of service contacts, and for each service contact at least one associated dialing sequence. The method further includes enabling a caller to select from the contact database a selected call contact from the list of call contacts and a selected service contact, and initiating the associated dialing sequence for the service type selected to automatically dial the contact telephone number of the selected call contact. The dialing sequences can include, for instance, an access number, an account number, and a security code, such as a personal identification number (PIN). Any service contact can have a plurality of associated dialing sequences selectable by the caller, each with a different access number for accessing that service contact from a different location.

The caller selects the call contact and a particular contact number, if there is more than one, and may also select the service contact and an access number for that service contact, if there is more than one. If the caller does not select a service contact, a default service contact with an associated dialing sequence is automatically selected.

In accordance with another aspect of the invention, a handheld electronic device is provided with a contact database containing a call contact list including for each call contact a contact telephone number, a plurality of service contacts, and for each service contact at least one associated dialing sequence. Input means enable the caller to select a selected contact from the call contact list and a selected service contact. Means are then provided for initiating the associated dialing sequence for the service contact selected to automatically dial the contact telephone number of the selected call contact. The input means can comprise a display selectively displaying the call contact list and service contacts and an input device for selecting the selected call contact and selected service contact from the display. The database stores for each associated dialing sequence an access number for the service contact. A service contact can have a plurality of associated dialing sequences each with a different access number such as a different access number for each of a number of locations. The database can also include a default service contact, which is automatically selected if the caller does not make a selection. The means initiating the dialing inserts the contact telephone number selected into the associated dialing sequence for the selected service contact. The call contact list can include a plurality of contact telephone numbers for a call contact any one of which may be selected by the caller. The selected contact telephone number is then inserted into the associated dialing sequence.

### BRIEF DESCRIPTION OF THE DRAWINGS

A full understanding of the invention can be gained from the following description of the preferred embodiments when read in conjunction with the accompanying drawings in which:
Figure 1 is a front view of a handheld electronic device incorporating the invention.
Figure 2 is a schematic diagram of the application's framework for the handheld electronic device of Figure 1.
Figure 3 illustrates the organization of a database maintained in the handheld electronic device and that forms one aspect of the invention.
Figure 4 is a flow chart for making a call using the contact application of the handheld electronic device.
Figure 5 is a flow chart for making a call using the phone application of the handheld electronic device.

### DESCRIPTION OF THE PREFERRED EMBODIMENTS

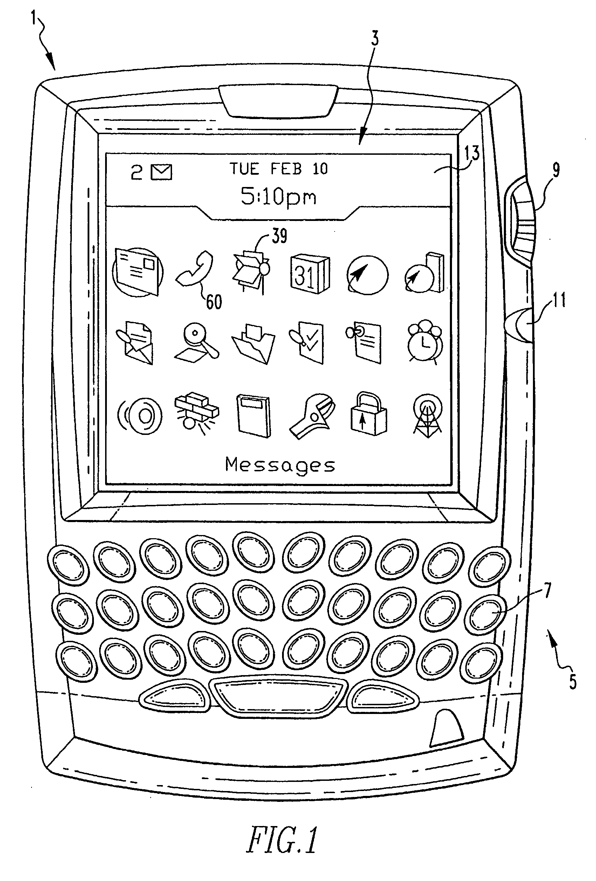

Figure 1 illustrates a handheld electronic device 1 in which the various aspects of the invention have been incorporated. The handheld electronic device 1 has a display 3 and an input device 5 that includes a keyboard 7, a track wheel 9 and an escape button 11.

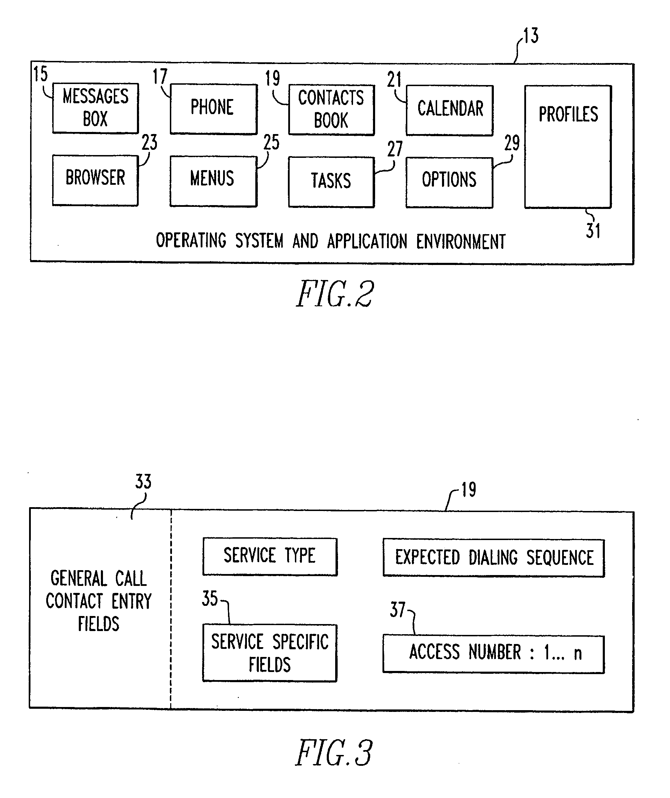

Figure 2 illustrates the operating system and application environment 13 of the handheld electronic device 1. The applications include a messages box 15 that implements text messaging, a phone application 17, a contacts book 19, a calendar function 21, a browser 23, a memos function 25, and a tasks function 27. Additional applications include options 29 and profiles 31. These various applications are known and perform in the known manner except for additions to the phone 17 and contacts books 19 applications which are modified as will be described. Typically, the contacts book 19 contains general information about call contacts, call contacts being persons or entities with whom the user of the handheld electronic device communicates. The general or generic call contact information includes information such as name, address, telephone numbers, fax numbers, cell phone numbers, company affiliations and the like.

Organization of the contacts book 19 in accordance with one aspect of the invention is illustrated in Figure 3. This contacts book is in essence a database which includes general contact entry fields 33, such as the contact's name and telephone numbers. In many cases there will be multiple telephone numbers such as a home phone number, a work phone number, and a cell phone number. There are various types of service through which a dialed call can be made to one of the call contacts. These service types can include, for instance, a credit card, a telephone calling card (both domestic and international), voice over Internet protocol (VOIP) service and session initiations protocol (SIP) service. The database 19 contains service specific fields 35 for each service type.

Each service provider specifies a dialing sequence that defines in what order that particular service provider wants fields to be dialed. For instance, a Bell card in North America wants the sequence O, telephone number, calling card number and PIN, while the Bell International card wants the access number, followed by the telephone number, the calling card number and the PIN. VOIP providers typically want access number, account number, PIN, telephone number. The particular dialing sequence associated with each of the service contacts listed under service types is stored as the expected dialing sequence 37. There can be more than one expected dialing sequence associated with a particular service contact. For example, a provider may have a plurality of access numbers, such as different numbers for calls originating in different geographical locations. It is advantageous to use the access number for the location closest to the caller in order to minimize charges.

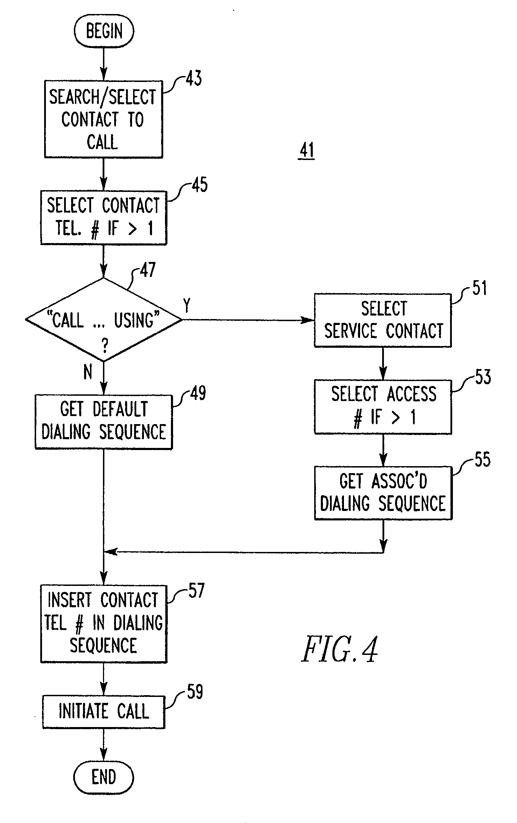

In making a dialed call, the user of the handheld electronic device 1 or caller can select the contact book application 19 through the display 3 shown in Figure 1 by highlighting the contact book icon 39 using the track wheel 9 in a well-known manner. A flow chart 41 of the process for making a call using the contacts book application is shown in Figure 4. The caller searches through the call contact entry fields and selects the contact to call as shown at 43. If the selected call contact has more than one contact telephone number, the caller selects the desired contact telephone number at 45. The caller has a choice between calling the contact and calling the contact using a specific service contact as indicated at 47. If the caller does not choose to select a particular service contact, a default service contact dialing sequence is called up at 49. If, however, the caller chooses to use a specific service contact, the selection is made at 51. If the selected service contact has more than one access number, the desired access number is selected at 53 and the associated dialing sequence is called up at 55. In all cases, the contact telephone number is automatically inserted into the appropriate dialing sequence at 57 and the call is initiated at 59.

Thus, it can be seen in accordance with the above aspect of the invention, the caller can make a dialed call simply by selecting a contact to call, and a particular number to call if the contact has more than one contact telephone number. If it is desired that a specific service provider be used, the caller need only select the service contact for that provider. The user can also select one of several access numbers for the selected service provider, if available, appropriate for the caller's location. In all cases, the caller does not have to remember or enter long numbers or sequences of numbers nor the sequence in which the numbers must be ordered, but only makes selections from menus provided by the handheld electronic device 1.

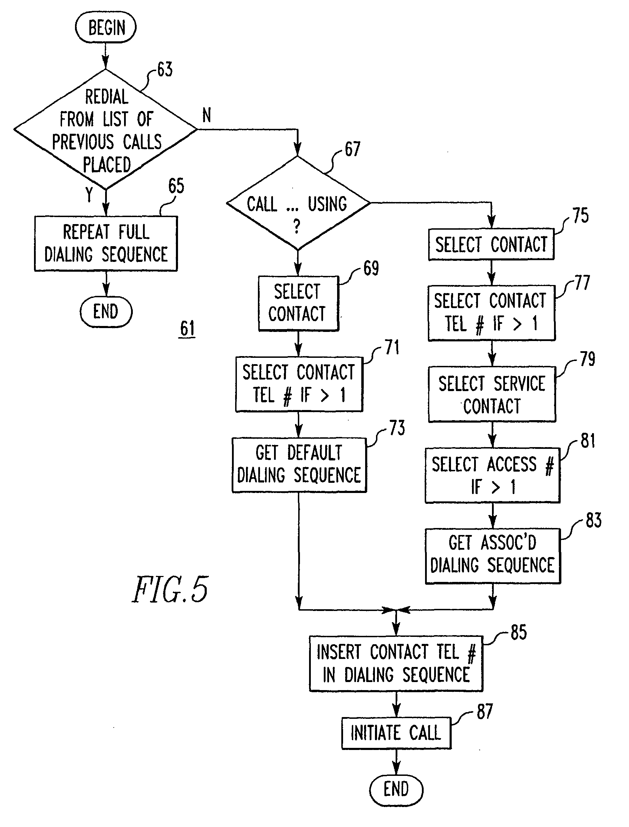

Figure 5 illustrates a flow chart 61 for implementation of an embodiment of the method using the phone function 17 through highlighting the phone icon 60 on the display 3 (see Figure 1). Initially, the caller is offered the option of redialing from a list of previous calls placed as indicated at 63. In this instance, the full dialing sequence from the previous call is repeated at 65. If a previous call is not available for use in dialing, the caller is given the choice at 67 of calling the contact using a default service contact or making the call using a specific service contact. If no specific service contact is selected, the caller selects the contact at 69 and a specific contact telephone number to use at 71 if more than one is available. The default dialing sequence is then obtained from the database at 73.

If the caller has chosen to select the service contact, the contact to be called is first selected together with the contact telephone number if more than one is available at 75 and 77, respectively. The desired service contact is then selected at 79 and a particular access number for that service contact is selected at 81 if more than one is available. The associated dialing sequence is then withdrawn from the database at 83. Whether a specified or default service contact is used, the selected contact telephone number is inserted into the appropriate dialing sequence at 85 and the call is initiated at 87.
While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A method of making dialed calls from a handheld electronic device (1) using one of a plurality of service providers, comprising the steps of:
establishing in the handheld electronic device (1) a contact database (19) containing: a list of call contacts, a call contact being a person or entity with whom the caller is able to communicate, the list of call contacts including for each call contact at least one contact telephone number; a plurality of service contacts for a corresponding plurality of service providers; and for each service contact at least one associated dialing sequence (37) for a service provider;
enabling a caller to select from the contact database (19) a selected call contact from the list of call contacts, and a selected service contact; and
initiating the associated dialing sequence for the selected service contact to automatically dial the contact telephone number of the selected contact;
wherein initiating the associated dialing sequence (37) comprises automatically inserting the contact telephone number of the selected call contact into the associated dialing sequence of the selected service contact in the order defined by the service provider for the selected dialing sequence.

2. The method of Claim 1, wherein the associated dialing sequence (37) includes at least an access number for the selected service contact.

3. The method of Claim 2, wherein the associated dialing sequence (37) further includes an account number.

4. The method of Claim 3, wherein the associated dialing sequence (37) further includes a security code.

5. The method of Claim 2, wherein the database comprises for at least one service contact a plurality of associated dialing sequences (37) each with a different access number, and enables the caller to select one of the plurality of associated dialing sequences for the at least one service contact.

6. The method of Claim 5, wherein each different access number is an access number for a different location.

7. The method of any preceding Claim, wherein the plurality of service contacts includes a default service contact having an associated dialing sequence (37) that is automatically selected when no service contact is selected by the caller.

8. The method of Claim 7, wherein enabling includes presenting the caller with a choice of selecting a service contact or not selecting a service contact and in the latter case, automatically selecting the default service contact.

9. The method of Claim 1, wherein the contact list includes a plurality of contact telephone numbers for at least one call contact, enabling comprises enabling the caller to select one of the plurality of contact telephone numbers for the at least one call contact and initiating the associated dialing sequence (37) comprises inserting the selected one of the plurality of contact telephone numbers into the associated dialing sequence (37) of the selected service contact.

10. A handheld electronic device (1) comprising:
a contact database (19) containing a list of call contacts, a call contact being a person or entity with whom the caller is able to communicate, the list of call contacts including for each call contact a contact telephone number, a plurality of service contacts for a corresponding plurality of service providers, and for each service contact at least one associated dialing sequence (37) for a service provider;
input means enabling a caller to select a selected call contact from the call contact list and a selected service contact; and
means (59, 87) initiating the associated dialing sequence (37) for the service contact selected to automatically dial the contact telephone number of the selected call contact;
wherein the means (59, 87) initiating the associated dialing sequence (37) automatically inserts the contact telephone number of the selected call contact into the associated dialing sequence (37) of the selected service contact in the order defined by the service provider for the selected dialing sequence.

11. The handheld electronic device (1) of Claim 10, wherein the input means comprises a display (3) selectively displaying the call contact list and service contacts, and an input device (5) for selecting the selected call contact and the selected service contact from the display (3).

12. The handheld electronic device (1) of Claim 10 or 11, wherein the database comprises for each associated dialing sequence (37) an account number for the service contact and for at least one service contact a plurality of associated dialing sequences (37) each with a different access number.

13. The handheld electronic device (1) of Claim 12, wherein each different access number is an access number for a different location.

14. The handheld electronic device (1) of any of Claims 10 to 13, wherein the database includes among the plurality of service contacts, a default service contact having an associated dialing sequence (37), and the means (59, 87) initiating dialing selects the default service contact when a call contact but no service contact is selected through the input means.

15. The handheld electronic device (1) of any of Claim 10 to 14, wherein the database includes in the call contact list a plurality of contact telephone numbers for at least one call contact, the input means enables selection of one of the plurality of contact telephone numbers for the at least one call contact, and the means (59, 87) initiating the associated dialing sequence (37) comprises means inserting the selected one of the plurality of contact telephone numbers into the associated dialing sequence for the selected service contact.

## Patentansprüche

1. Verfahren zum Herstellen von gewählten Rufen von einer tragbaren elektronischen Vorrichtung (1), die einen von einer Vielzahl von Dienst-Providern verwendet, welches die Schritte umfasst:
Aufbauen einer Kontakt-Datenbank (19) in der tragbaren elektronischen Vorrichtung (1), die umfasst: Eine Liste von Ruf-Kontakten, wobei ein Ruf-Kontakt eine Person oder eine Gesamtheit, mit welcher der Anrufer in der Lage ist, zu kommunizieren, wobei die Liste von Ruf-Kontakten für jeden Ruf-Kontakt wenigstens eine Kontakt-Telefonnummer umfasst, eine Vielzahl von Dienst-Kontakten für eine entsprechende Vielzahl von Dienst-Providern, und für jeden Dienst-Kontakt wenigstens eine zugeordnete Wählfolge (37) für einen Dienst-Provider,
Ermöglichen für einen Anrufer, aus der Kontakt-Datenbank (19) einen ausgewählten Ruf-Kontakt aus der Liste von Ruf-Kontakten und einen ausgewählten Dienst-Kontakt auszuwählen, und
Initiieren der zugeordneten Wählfolge für den ausgewählten Dienst-Kontakt, um die Kontakt-Telefonnummer des ausgewählten Kontaktes automatisch zu wählen,
wobei ein Initiieren der zugeordneten Wählfolge (37) ein automatisches Einfügen der Kontakt-Telefonnummer des ausgewählten Ruf-Kontaktes in die zugeordnete Wählfolge des ausgewählten Dienst-Kontaktes in der Reihenfolge, welche durch den Dienst-Provider für die ausgewählte Wählfolge definiert wird, umfasst.

2. Verfahren nach Anspruch 1, wobei die zugeordneten Wählfolge (37) wenigstens eine Zugangsnummer für den ausgewählten Dienst-Kontakt umfasst.

3. Verfahren nach Anspruch 2, wobei die zugeordnete Wählfolge (37) weiterhin eine Verzeichnisnummer umfasst.

4. Verfahren nach Anspruch 3, wobei die zugeordnete Wählfolge (37) weiterhin einen Sicherheitscode umfasst.

5. Verfahren nach Anspruch 2, wobei die Datenbank für wenigstens einen Dienst-Kontakt eine Vielzahl von zugeordneten Wählfolgen (37) jeweils mit einer unterschiedlichen Zugangsnummer umfasst und dem Anrufer ermöglicht, eine der Vielzahl von zugeordneten Wählfolgen für den wenigstens einen Dienst-Kontakt auszuwählen.

6. Verfahren nach Anspruch 5, wobei jede unterschiedliche Zugangsnummer eine Zugangsnummer für einen unterschiedlichen Standort ist.

7. Verfahren nach einem der vorhergehenden Ansprüche, wobei die Vielzahl von Dienst-Kontakten einen Standard-Dienst-Kontakt umfasst, der eine zugeordnete Wählfolge (37) aufweist, welche automatische ausgewählt wird, wenn durch den Anrufer keinen Dienst-Kontakt ausgewählt ist.

8. Verfahren nach Anspruch 7, wobei ein Ermöglichen ein Vorstellen für den Anrufer mit einer Wahl zum Auswählen eines Dienst-Kontaktes oder Nicht-Auswählen eines Dienst-Kontaktes und, in letzterem Fall, zum automatischen Auswählen des Standard-Dienst-Kontaktes umfasst.

9. Verfahren nach Anspruch 1, wobei die Kontaktliste eine Vielzahl von Kontakt-Telefonnummern für wenigstens einen Ruf-Kontakt umfasst, ein Ermöglichen ein Ermöglichen für den Anrufer, eine der Vielzahl von Kontakt-Telefonnummern für den wenigstens einen Ruf-Kontakt auszuwählen, umfasst und ein Initiieren der zugeordneten Wählfolge (37) ein Einfügen der ausgewählten der Vielzahl von Kontakt-Telefonnummern in die zugeordnete Wählfolge (37) des ausgewählten Dienst-Kontaktes umfasst.

10. Tragbare elektronische Vorrichtung (1), umfassend:
Eine Kontakt-Datenbank (19), die eine Liste von Ruf-Kontakten, wobei ein Ruf-Kontakt eine Person oder eine Gesamtheit, mit welcher der Anrufer in der Lage ist, zu kommunizieren, wobei die Liste von Ruf-Kontakten für jeden Ruf-Kontakt wenigstens eine Kontakt-Telefonnummer umfasst, eine Vielzahl von Dienst-Kontakten für eine entsprechende Vielzahl von Dienst-Providern, und für jeden Dienst-Kontakt wenigstens eine zugeordnete Wählfolge (37) für einen Dienst-Provider umfasst,
eine Eingabeeinrichtung, die einem Anrufer ermöglicht, einen ausgewählten Ruf-Kontakt aus der Liste von Ruf-Kontakten und einen ausgewählten Dienst-Kontakt aus der Kontakt-Datenbank (19) auszuwählen, und
eine Einrichtung (59, 87) zum Initiieren der zugeordneten Wählfolge (37) für den ausgewählten Dienst-Kontakt, um die Kontakt-Telefonnummer des ausgewählten Ruf-Kontaktes automatisch zu wählen,
wobei die Einrichtung (59, 87) zum Initiieren der zugeordneten Wählfolge (37) die Kontakt-Telefonnummer des ausgewählten Ruf-Kontaktes in die zugeordnete Wählfolge (37) des ausgewählten Dienst-Kontaktes in der Reihenfolge, welche durch den Dienst-Provider für die ausgewählte Wählfolge definiert wird, automatisch einfügt.

11. Tragbare elektronische Vorrichtung (1) nach Anspruch 10, wobei die Eingabeeinrichtung eine Anzeige (3), welche die Ruf-Kontaktliste und Dienst-Kontakte selektiv angezeigt, und eine Eingabeeinrichtung (5) zum Auswählen des ausgewählten Ruf-Kontaktes und des ausgewählten Dienst-Kontaktes von der Anzeige (3) umfasst.

12. Tragbare elektronische Vorrichtung (1) nach Anspruch 10 oder 11, wobei die Datenbank für jede zugeordneten Wählfolge (37) eine Zugangsnummer für den Dienst-Kontakt und für wenigstens einen Dienst-Kontakt eine Vielzahl von zugeordneten Wählfolgen (37) jeweils mit einer unterschiedlichen Zugangsnummer umfasst.

13. Tragbare elektronische Vorrichtung (1) nach Anspruch 12, wobei jede unterschiedliche Zugangsnummer eine Zugangsnummer für einen unterschiedlichen Standort ist.

14. Tragbare elektronische Vorrichtung (1) nach einem der Ansprüche 10 bis 13, wobei die Datenbank unter einer Vielzahl von Dienst-Kontakten einen Standard-Dienst-Kontakt, der eine zugeordnete Wählfolge (37) aufweist, umfasst und die Einrichtung (59, 87) zum Initiieren eines Wählens den Standard-Dienst-Kontakt auswählt, wenn ein Ruf-Kontakt, jedoch keinen Dienst-Kontakt durch die Eingabeeinrichtung ausgewählt ist.

15. Tragbare elektronische Vorrichtung (1) nach einem der Ansprüche 10 bis 14 wobei die Datenbank in der Ruf-Kontaktliste eine Vielzahl von Kontakt-Telefonnummern für wenigstens einen Ruf-Kontakt umfasst, die Eingabeeinrichtung eine Auswahl einer der Vielzahl von Kontakt-Telefonnummern für den wenigstens einen Ruf-Kontakt ermöglicht und die Einrichtung (59, 87) zum Initiieren der zugeordneten Wählfolge (37) eine Einrichtung zum Einfügen der ausgewählten der Vielzahl von Kontakt-Telefonnummern in die zugeordnete Wählfolge des ausgewählten Dienst-Kontaktes umfasst.

## Revendications

1. Procédé pour effectuer des appels par numérotation à partir d'un dispositif électronique de poche (1), en utilisant un d'une multiplicité de fournisseurs de service, comprenant les étapes suivantes :
établir dans le dispositif électronique de poche (1) une base de données de contacts (19) contenant : une liste de contacts d'appel, un contact d'appel étant une personne ou une entité avec laquelle l'appelant est capable de communiquer, la liste de contacts d'appel incluant pour chaque contact d'appel au moins un numéro de téléphone de contact ; une multiplicité de contacts de service pour une multiplicité correspondante de fournisseurs de service ; et pour chaque contact de service au moins une séquence de numérotation associée (37) pour un fournisseur de service ;
permettre à un appelant de sélectionner dans la base de données de contacts (19) un contact d'appel sélectionné issu de la liste de contacts d'appel, et un contact de service sélectionné ; et
lancer la séquence de numérotation associée pour le contact de service sélectionné, pour composer automatiquement le numéro de téléphone de contact du contact sélectionné ;
dans lequel le lancement de la séquence de numérotation associée (37) comprend l'insertion automatique du numéro de téléphone de contact du contact d'appel sélectionné dans la séquence de numérotation associée du contact de service sélectionné, dans l'ordre défini par le fournisseur de service pour la séquence de numérotation sélectionnée.

2. Procédé selon la revendication 1, dans lequel la séquence de numérotation associée (37) comprend au moins un numéro d'accès pour le contact de service sélectionné.

3. Procédé selon la revendication 2, dans lequel la séquence de numérotation associée (37) comprend en outre un numéro de compte.

4. Procédé selon la revendication 3, dans lequel la séquence de numérotation associée (37) comprend en outre un code de sécurité.

5. Procédé selon la revendication 2, dans lequel la base de données comprend pour au moins un contact de service, une multiplicité de séquences de numérotation associées (37), ayant chacune un numéro d'accès différent, et permet à l'appelant de sélectionner une de la multiplicité de séquences de numérotation associées, pour l'au moins un contact de service.

6. Procédé selon la revendication 5, dans lequel chaque numéro d'accès différent est un numéro d'accès pour un emplacement différent.

7. Procédé selon l'une quelconque des revendications précédentes, dans lequel la multiplicité de contacts de service inclut un contact de service par défaut ayant une séquence de numérotation associée (37) qui est sélectionnée automatiquement lorsque aucun contact de service n'est sélectionné par l'appelant.

8. Procédé selon la revendication 7, dans lequel l'opération consistant à permettre de sélectionner comprend la présentation à l'appelant du choix de sélectionner un contact de service ou de ne pas sélectionner un contact de service, et dans ce dernier cas, la sélection automatique du contact de service par défaut.

9. Procédé selon la revendication 1, dans lequel la liste de contacts inclut une multiplicité de numéros de téléphone de contact pour au moins un contact d'appel, l'opération consistant à permettre de sélectionner comprend l'opération consistant à permettre à l'appelant de sélectionner un de la multiplicité de numéros de téléphone de contact pour l'au moins un contact d'appel, et le lancement de la séquence de numérotation associée (37) comprend l'insertion du numéro sélectionné parmi la multiplicité de numéros de téléphone de contact dans la séquence de numérotation associée (37) du contact de service sélectionné.

10. Dispositif électronique de poche (1) comprenant:
une base de données de contacts (19) contenant une liste de contacts d'appel, un contact d'appel étant une personne ou une entité avec laquelle l'appelant est capable de communiquer, la liste de contacts d'appel incluant, pour chaque contact d'appel, un numéro de téléphone de contact, une multiplicité de contacts de service pour une multiplicité correspondante de fournisseurs de service, et pour chaque contact de service au moins une séquence de numérotation associée (37) pour un fournisseur de service ;
un moyen d'entrée permettant à un appelant de sélectionner un contact d'appel sélectionné dans la liste de contacts d'appel et un contact de service sélectionné ; et
un moyen (59, 87) qui lance la séquence de numérotation associée (37) pour le contact de service sélectionné, de façon à composer automatiquement le numéro de téléphone de contact du contact d'appel sélectionné ;
dans lequel le moyen (59, 87) qui lance la séquence de numérotation associée (37) insère automatiquement le numéro de téléphone de contact du contact d'appel sélectionné dans la séquence de numérotation associée (37) du contact de service sélectionné, dans l'ordre défini par le fournisseur de service pour la séquence de numérotation sélectionnée.

11. Dispositif électronique de poche (1) selon la revendication 10, dans lequel le moyen d'entrée comprend un moyen de visualisation (3) qui visualise sélectivement la liste de contacts d'appel et les contacts de service, et un dispositif d'entrée (5) pour sélectionner, sur le dispositif de visualisation (3), le contact d'appel sélectionné et le contact de service sélectionné.

12. Dispositif électronique de poche (1) selon la revendication 10 ou 11, dans lequel la base de données comprend, pour chaque séquence de numérotation associée (37), un numéro de compte pour le contact de service, et pour au moins un contact de service, une multiplicité de séquences de numérotation associées (37), chacune avec un numéro d'accès différent.

13. Dispositif électronique de poche (1) selon la revendication 12, dans lequel chaque numéro d'accès différent est un numéro d'accès pour un emplacement différent.

14. Dispositif électronique de poche (1) selon l'une quelconque des revendications 10 à 13, dans lequel la base de données inclut, parmi la multiplicité de contacts de service, un contact de service par défaut ayant une séquence de numérotation associée (37), et le moyen (59, 87) qui lance la numérotation sélectionne le contact de service par défaut lorsqu'un contact d'appel, mais pas de contact de service, est sélectionné par l'intermédiaire du moyen d'entrée.

15. Dispositif électronique de poche (1) selon l'une quelconque des revendications 10 à 14, dans lequel la base de données inclut dans la liste de contacts d'appel une multiplicité de numéros de téléphone de contact pour au moins un contact d'appel, le moyen d'entrée permet la sélection d'un de la multiplicité de numéros de téléphone de contact pour l'au moins un contact d'appel, et le moyen (59, 87) qui lance la séquence de numérotation associée (37) comprend un moyen insérant le numéro sélectionné parmi la multiplicité de numéros de téléphone de contact, dans la séquence de numérotation associée pour le contact de service sélectionné.
